**Europäisches Patentamt**

**European Patent Office**

**Office européen des brevets**

(19)

(11) Numéro de publication: **0 017 529**
**B1**

(12)

# FASCICULE DE BREVET EUROPEEN

(45) Date de publication du fascicule du brevet:
07.09.83

(51) Int. Cl.³: **H 01 G 4/30**, H 01 G 1/14

(21) Numéro de dépôt: **80400341.6**

(22) Date de dépôt: **14.03.80**

(54) **Condensateur céramique de puissance.**

(30) Priorité: **23.03.79 FR 7907388**

(43) Date de publication de la demande:
**15.10.80 Bulletin 80/21**

(45) Mention de la délivrance du brevet:
**07.09.83 Bulletin 83/36**

(84) Etats contractants désignés:
**DE GB IT**

(56) Documents cités:
**FR-A-2 227 612**
**FR-A-2 363 876**

(73) Titulaire: **L.C.C.-C.I.C.E. - COMPAGNIE EUROPEENNE DE COMPOSANTS ELECTRONIQUES, 101, Boulevard Murat, F-75781 Paris Cedex 16 (FR)**

(72) Inventeur: **Frappart, Pierre, "THOMSON-CSF" SCPI - 173, Bld Haussmann, F-75360 Paris Cedex 08 (FR)**
Inventeur: **Guichard, Serge, "THOMSON-CSF" SCPI - 173, Bld Haussmann, F-75360 Paris Cedex 08 (FR)**
Inventeur: **Saint-Marcoux, Roland, "THOMSON-CSF" SCPI - 173, Bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

Condensateur céramique de puissance

La présente invention concerne un condensateur céramique de puissance. Elle se rapporte plus particulièrement aux condensateurs de ce type capables de fonctionner sous des tensions de plusieurs milliers de volts sous une intensité pouvant atteindre plusieurs dizaines d'ampères, tels que les condensateurs utilisés dans les matériels professionnels à haute fréquence.

Les condensateurs céramiques de puissance tels que définis ci-dessus sont généralement réalisés à partir d'un bloc de céramique ayant une forme de disque ou d'assiette revêtu d'une électrode de part et d'autre de ses faces latérales, ou ayant une forme cylindrique permettant d'obtenir des condensateurs de type tubulaire. Le bloc de céramique utilisé dans ces condensateurs est fabriqué par compression à froid puis frittage.

L'inconvénient essentiel de ces condensateurs est leur taille qui devient rapidement inacceptable compte tenu de la puissance stockée. Cette puissance est en effet limitée par les mauvais échanges thermiques avec l'extérieur.

Il est connu par ailleurs, par exemple du brevet français N° 2 227 612, de réaliser des condensateurs céramiques multi-couches. De tels condensateurs ont des capacités relativement importantes sous un faible volume, mais on n'a pas su jusqu'à présent réaliser des condensateurs de puissance selon cette technologie.

Le condensateur selon l'invention répond au problème posé et permet donc d'éviter les inconvénients des condensateurs de puissance connus jusqu'à ce jour. Le condensateur selon l'invention est caractérisé en ce qu'il comporte, en premier lieu, un corps monolithique multi-couches constitué par l'empilage de films diélectriques céramiques séparés les uns des autres par des armatures métalliques réparties en deux séries alternées latéralement décalées l'une par rapport à l'autre, les films diélectriques de dimensions supérieures à celles des armatures formant sur chacun des deux côtés opposés dudit corps situés dans le prolongement de la direction de décalage un volume de protection dans lequel est formée une gorge arrondie à effet anti-corona dans laquelle vient affleurer l'une desdites séries d'armatures, et, en second lieu, deux connexions électriques extérieures dont chacune est réunie à l'une desdites séries d'armatures au moyen d'une métallisation réalisée dans ladite gorge à effet anti-corona, chaque gorge ayant une forme telle qu'elle allonge les lignes de fuite du champ électrique sur le pourtour des métallisations de prise de connexion et assure la protection mécanique et l'isolement électrique par rapport à la masse des métallisations.

Les films diélectriques céramiques auront une épaisseur comprise entre 20 et 200 microns et plus couramment entre 40 et 100 microns, tandis que les armatures métalliques auront une épaisseur comprise entre 2 et 10 microns.

On a, en effet, constaté qu'en diminuant l'épaisseur des couches diélectriques céramiques, il se produisait une augmentation de la rigidité diélectrique de celles-ci, tandis qu'en augmentant l'épaisseur des armatures métalliques, on obtenait une meilleure dissipation des calories. Le condensateur obtenu possède ainsi de bonnes caractéristiques de tenue en tension et de dissipation thermique.

Selon un autre mode de réalisation, le condensateur selon l'invention est caractérisé en ce que les connexions externes sont en ruban d'argent et sont frittées sur les métallisations de prise de contact au moyen d'un émail à base d'argent. De cette manière, les condensateurs ainsi obtenus peuvent fonctionner jusqu'à des températures de l'ordre de 700° C.

On a amélioré encore la tenue en tension du condensateur selon l'invention en remplissant les gorges avec un polymère solide de manière à augmenter l'isolement électrique du condensateur et améliorer la résistance à l'arrachement des connexions externes.

L'invention sera mieux comprise à l'aide des exemples de réalisation suivants, donnés à titre non limitatif, conjointement avec les figures qui représentent:
— figure 1: les courbes de caractéristiques en fonctionnement des condensateurs de puissance;
— figure 2: un condensateur de puissance selon l'art connu, de forme »disque«, monolithique;
— figure 3: un autre condensateur de puissance selon l'art connu, de forme »assiette«, monolithique;
— figure 4: un troisième type de condensateur de puissance selon l'art connu, de forme tubulaire, monolithique;
— figure 5: une vue en coupe d'un condensateur selon l'invention, multi-couches;
— figure 6: une vue en plan du même condensateur selon l'invention.

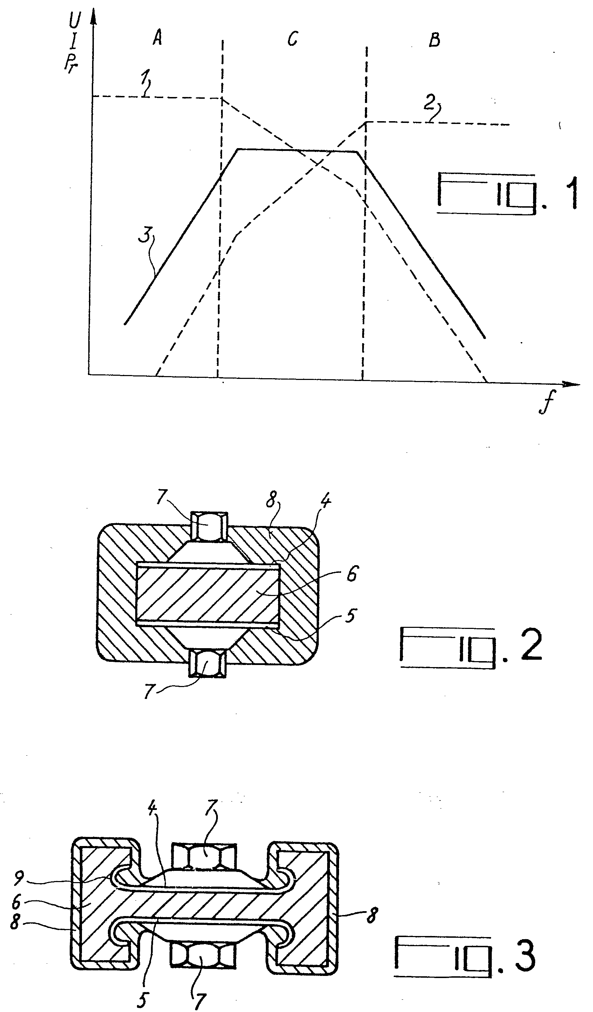

Les courbes de la figure 1 aideront à mieux comprendre les limitations en fonctionnement des condensateurs de puissance.

Les condensateurs de puissance se caractérisent par les paramètres tension, intensité, puissance réactive.

La fréquence de fonctionnement étant portée en abscisses, trois courbes sont superposées sur le même graphique, la courbe 1 correspondant à la tension, la courbe 2 à l'intensité et la courbe 3 à la puissance réactive, les unités de tension U, d'intensité I et de puissance réactive $P_r$ étant portées en ordonnées selon une échelle linéaire.

La tension continue, plus la tension haute fréquence de crête superposée, que peut supporter un condensateur doit être inférieure à la tension nominale $U_n$. La rigidité diélectrique d'un condensateur, c'est-à-dire sa faculté de ne pas percer sous tension, est liée à la nature du diélectrique, mais également à la nature de son profil. Le diélectrique peut être, dans le cas présent, considéré comme une constante puisque l'invention porte sur les condensateurs à diélectrique céramique. Mais le profil du diélectrique et le procédé de mise en oeuvre de la céramique influent sur la tenue en tension. La tension nominale $U_n$ peut atteindre 22 kilovolts/crête dans les condensateurs céramique d'usage courant.

La tension de service d'un condensateur décroît, à partir d'un certain seuil, lorsque la fréquence augmente (courbe 1 de la figure 1).

L'intensité du courant traversant le condensateur doit être inférieure à l'intensité maximale I efficace fixée par le contructeur, en fonction de plusieurs paramètres tels que l'épaisseur des armatures ou le diamètre des connexions. L'intensité efficace croît, jusqu'à un seuil limite, lorsque la fréquence augmente (courbe 2).

La puissance réactive d'un condensateur s'exprime par la formule:

$$P_r = U^2 \, C \omega = \frac{I^2}{C \omega}$$

dans laquelle C est la capacité du condensateur et $\omega = 2 \pi f$, f étant la fréquence.

Elle est limitée par l'échauffement du condensateur dont la valeur maximale ne doit pas dépasser 30 à 45°C en convection naturelle. La variation de la puissance réactive $P_r$, en fonction de la fréquence, comporte trois régions principales (courbe 3):

1)  Aux basses fréquences, la limitation vient de la tension qui ne peut être dépassée, et la puissance réactive croît avec la fréquence (région A de la figure 1);
2)  Aux fréquences élevées, la limitation de puissance réactive est causée par l'échauffement des armatures et des connexions, dû à l'intensité qui traverse le condensateur, et la puissance réactive est inversement proportionnelle à la fréquence à température constante (région B);
3)  Aux fréquences intermédiaires, la puissance réactive est constante et indépendante de la fréquence à température constante (région C). La limitation en puissance provient essentiellement des pertes dans le diélectrique, proportionnelles à la puissance active à la fréquence considérée: ces pertes se traduisent par une puissance active.

Un premier type de pertes, exprimées par la formule

$$Pa_1 = P_r \, tg \delta$$

dans laquelle $tg \delta$ est l'angle de pertes dans le diélectrique, est intégralement transformé en chaleur dans le diélectrique et évacué par les armatures et les connexions, à la surface du diélectrique.

Un second type de pertes, exprimées par la formule

$$Pa_2 = P_r \, R \, C \omega = R I^2$$

dans laquelle R est la résistance série équivalente du condensateur, C la capacité du condensateur, $\omega$ la pulsation $2 \pi f$, est dû à l'effet Joule. Ces pertes du second type apparaissent, aux fréquences élevées, dans les armatures et les connexions où elles deviennent prépondérantes, et elles produisent un échauffement qui se transmet au diélectrique. Les calories produites par effet Joule sont évacuées, par connexion, par la surface des armatures.

Ces problèmes d'évacuation des calories dégagées par effet de pertes sont illustrés par trois exemples de condensateurs de puissance, choisis dans l'art connu.

La figure 2 représente un condensateur »disque«. Il est composé de deux armatures métalliques 4 et 5, séparées entre elles par un diélectrique monolithique 6. Les connexions électriques 7, sur les deux armatures, sont généralement assurées par des écrous, eux-mêmes solidaires de pattes de fixation, de façon à répartir et écouler l'importante densité de courant. De tels condensateurs disques sont limités en tension — et donc en puissance — par leur conception très simple, mais surtout par les mauvais échanges thermiques avec l'extérieur, dûs à une protection plastique 8 d'une épaisseur notable. Les calories ne sont évacuées, essentiellement, que par les connexions.

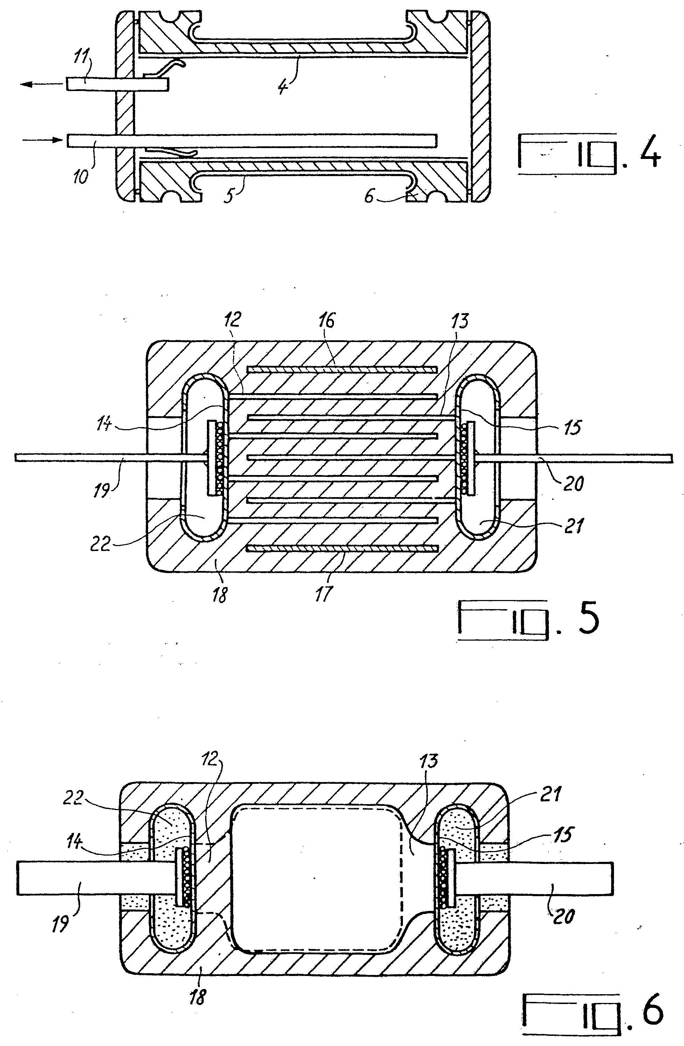

La figure 3 représente un autre condensateur de puissance selon l'art connu, d'un type dénommé »assiette«.

Les mêmes indices de repère désignent les mêmes objets que sur la figure 2, et ce type de condensateur comporte deux armatures 4 et 5 déposées sur un diélectrique monolithique 6, les connexions étant prises en 7, généralement sur des écrous. Cependant, les condensateurs du type »assiette« comportent, sur chaque armature, une gorge 9 dont la seule fonction est de recourber le champ électrique de fuite. Le diélectrique 6 est adapté à la forme des électrodes, et recouvre, extérieurement, les gorges 9. Une protection plastique 8 recouvre l'ensemble du condensateur, hormis les connexions, qui sont soudées.

Ce type de condensateur est souvent adopté pour les modèles plus puissants que ceux du type »disque«, car il offre des garanties de bon fonctionnement aux tensions élevées, mais il supporte les mêmes inconvénients: puissance limitée par l'évacuation insuffisante des calories.

Deux solutions sont possibles pour accroître la puissance des condensateurs.

Une première solution, illustrée par la figure 4, qui représente un condensateur tubulaire selon l'art connu, consiste à donner au condensateur de puissance une forme telle qu'il devient possible de faire circuler un fluide de refroidissement à l'intérieur d'une enceinte fermée, qui est le condensateur lui-même.

Ce type de condensateur comporte deux armatures 4 et 5, déposées sur les surfaces interne et externe d'un diélectrique 6 qui a fréquemment une forme cylindrique. Deux flasques forment les extrémités du tube, ce qui autorise la circulation, interne, d'un fluide de refroidissement qui pénètre par une tubulure 10 et est évacué par une autre tubulure 11.

Les condensateurs tubulaires sont utilisés pour de plus fortes puissances que les modèles précédemment cités. Cependant, ils comportent des inconvénients dont les plus graves sont:

- un très fort encombrement;
- des problèmes délicats liés au fait que le fluide de refroidissement, et tout son système associé, est au potentiel de l'armature interne, ce qui oblige pratiquement à la maintenir au potentiel zéro;
- des fuites de liquides sont toujours possibles, dont les conséquences sur le matériel environnant peuvent être graves, aux hautes tensions;
- la fissuration du bloc céramique monolithique, par chocs thermiques.

La solution mise en oeuvre par le condensateur objet de l'invention a pour objectif d'augmenter la puissance stockée par unité de volume, en s'affranchissant d'un système de refroidissement interne.

L'invention consiste en un condensateur de puissance, d'un excellent rapport puissance réactive/volume, obtenu par empilage, alternativement, de couches diélectriques très fines et d'armatures épaisses, le diélectrique en films minces ayant une rigidité diélectrique supérieure à celle du même diélectrique sous forte épaisseur, en blocs monolithiques, ce qui contribue à une diminution des dimensions du condensateur, et donc favorise l'évacuation des calories produites.

Ainsi, l'énergie active produite à l'intérieur du condensateur est évacuée par conduction thermique par les lames métalliques servant d'armatures: la multiplicité de ces lames, et l'épaisseur qui leur est conférée à dessein favorisent la conduction thermique, et homogénisent la température au sein du diélectrique. De plus, une meilleure forme du diélectrique et des armatures permet d'atteindre des tensions plus élevées, et donc d'obtenir des puissances plus importantes: ainsi, un condensateur selon l'invention correspond à une miniaturisation de l'ordre de 5 à 10 par rapport à un condensateur »assiette« de même capacité ou, réciproquement, correspond, pour un même volume, à une augmentation de la puissance réactive d'un ordre de grandeur de 5 à 10.

La figure 5 représente une coupe, dans un plan perpendiculaire à celui des armatures, d'un condensateur de puissance multicouches, selon l'invention.

Le condensateur selon l'invention comporte deux séries d'armatures 12 et 13, empilées pour constituer un dispositif appelé »multicouches«. Dans l'empilage se présentent alternativement une armature de la série 12, puis une armature de la série 13, séparées par un film de diélectrique céramique très mince. Les deux séries d'armatures, qui ont même forme et même surface, sont légèrement décalées l'une par rapport à l'autre, selon une direction, afin de rendre possible la prise de contact électrique sur l'extrémité dégagée des armatures. Ainsi, la série des armatures 12 est réunie par une métallisation 14 selon laquelle les armatures 12 sont montées en parallèle. De la même façon, la série des armatures 13 est réunie par une métallisation 15. L'empilage est terminé, sur ses deux extrémités, par deux armatures flottantes 16 et 17, c'est-à-dire deux armatures qui ne sont pas reliées à une connexion électrique: leur fonction est de refermer le champ de fuite extérieur, et ainsi de minimiser les fuites, par une meilleure répartition du gradient de potentiel.

Le diélectrique céramique 18 sépare entre elles les armatures, dans leur empilage. Mais, de plus, ses dimensions extérieures, sur les faces du condensateur qui comportent les métallisations 14 et 15 sont telles que le diélectrique enveloppe les métallisations et une partie des connexions électriques 19 et 20, formant deux gorges 21 et 22 dont la fonction sera exposée ultérieurement.

Les connexions électriques 19 et 20 sont en ruban d'argent, dont la très bonne conductibilité électrique et thermique est bien connue. Ces connexions sont réunies aux métallisations 14 et 15 soit par une brasure tendre à base d'étain-plomb, fondant vers 300°C, soit par une brasure à base d'alliage d'argent, soit par frittage. Ce dernier procédé est nouveau dans cette application de connexions de condensateur: il consiste à fritter le ruban de connexion sur la métallisation au moyen d'un émail composé de poudre de verre et de poudre d'argent. Les particules de verre coopèrent à l'accrochage des surfaces, et les particules d'argent diminuent la résistance du contact et limitent l'échauffement. La température de fonctionnement d'une connexion ainsi frittée atteint 700°C.

La figure 6 représente le même condensateur selon l'invention, dans une vue en plan, à 90° par rapport à la coupe de la figure 5.

Cette figure 6 montre une armature 13, dans le plan de la figure, décalée par rapport à une armature 12 dont elle est séparée par une couche de diélectrique. Les autres parties du condensateur, sauf les rubans de connexion 19 et 20, apparaissent identiquement à celles de la figure 5, car les gorges 21 et 22 sont symétriques et oblongues.

Un certain nombre de points particuliers et originaux, qui seront maintenant exposés, font que le condensateur selon l'invention est amélioré en tenue en tension, en intensité admise, en dissipation thermique et, par voie de conséquence aux paramètres précédents, en puissance réactive.

En ce qui concerne la tenue en tension, deux séries de moyens mis en oeuvre concernent le diélectrique et les armatures.

La rigidité diélectrique intrinsèque des diélectriques céramiques tels que ceux utilisés pour les condensateurs de puissance atteint 250 à 300 kilovolts par millimètre. Cependant, les valeurs pratiques, dans les condensateurs selon l'art connu, tels que les modèles »disques«, comportant un bloc diélectrique monolithique, ne dépassent pas 2 à 4 kilovolts par millimètre, soit environ le centième de la valeur théorique.

L'amélioration apportée par les condensateurs de puissance multicouches consiste à réaliser des films céramiques très minces, d'épaisseur comprise entre 20 et 200 microns, mais plus couramment entre 40 et 100 microns, dont la rigidité diélectrique réelle est de l'ordre de 20 kilovolts par millimètre, soit 5 fois supérieure à celle des blocs monolithiques.

De plus, la forme des armatures est modifiée pour éviter l'effet de pointe. Leur forme générale est un ractangle, mais dont les angles sont fortement arrondis, ce qui contribue à diminuer les pertes par effet de pointe, et autorise une tension plus élevée sans atteindre le perçage des couches diélectriques.

Des armatures flottantes, 16 et 17, font effet d'écran et d'égalisateur du champ de fuite, par une meilleure répartition du gradient de potentiel. Elles coopèrent avec les gorges métallisées 21 et 22 à refermer le champ de fuite sur lui-même.

Pour limiter l'effet Corona, augmenter la tension de contournement et réaliser un isolement masse suffisant, le diélectrique déborde, sur les faces du condensateur portant les connexions, et forme deux gorges 21 et 22. Ainsi les armatures se trouvent suffisamment en retrait des bords extérieurs du condensateur pour assurer un bon isolement par rapport à la masse: le retrait est de 1 millimètre pour 5 kilovolts, soit en pratique une gorge de 2 à 3 millimètres de profondeur. De plus, les gorges 21 et 22 sont arrondies sur leur pourtour: ainsi, les métallisations 14 et 15 de prises de contact sont elles-mêmes arrondies, ce qui a pour effet de recourber sur lui-même le champ électrique de fuite, en allongeant les lignes de fuite et en évitant les effets de pointe. Les métallisations 14 et 15 s'arrêtent en retrait de l'angle intérieur de la rainure de sortie. Les gorges 21 et 22 sont, en fin de fabrication, remplies d'un polymère solide, électriquement isolant, qui coopère à l'isolement des métallisations par rapport à la masse, et améliore considérablement la résistance à l'arrachement des connexions 19 et 20.

La réalisation d'un condensateur selon l'invention tient compte de l'intensité qui doit la traverser. Ainsi pour permettre le passage de courants élevés sans provoquer d'échauffement interne, assurer un bon transfert thermique et garantir une bonne homogénéité de température à l'intérieur du bloc multicouches, l'épaisseur des armatures est comprise entre 2 et 10 microns par opposition aux 1 ou 2 microns des condensateurs selon l'art connu. Les armatures sont constituées d'alliages tels que Ag/Pt, Ag/Pd, Au/Pt/Pd, ou de métaux purs tels que Pt, Pd etc. L'augmentation d'épaisseur des armatures, dans un rapport moyen de 3, coopère avec la diminution d'épaisseur du diélectrique, pour faciliter l'évacuation de la puissance active $Pa_2$, et par voie de conséquence, augmenter la puissance réactive Pr réellement disponible, avec un gain considérable de volume. Ainsi, à titre d'exemple et condensateur selon l'invention remplace un condensateur du type assiette, dans un volume de 5 à 10 fois plus faible pour une fonction identique.

De plus, la forme parallélépipédique du condensateur selon l'invention facilite son empilage pour montage en série ou en parallèle.

La température de fonctionnement peut atteindre 700° C sans détérioration du condensateur, en raison du frittage à l'argent des connexions sur les armatures.

Enfin, l'association du condensateur selon l'invention avec un système de refroidissement accroît la puissance réactive d'un facteur compris entre 2 et 100, selon le système employé, du radiateur à convection naturelle jusqu'à l'enceinte de refroidissement par caloduc.

Le condensateur selon l'invention est de plus autoprotégé, en fonction de sa géométrie selon laquelle les armatures sont disposées à l'intérieur d'un bloc céramique, et le raccordement des connexions externes sur les métallisations disposé à l'intérieur des gorges. Une protection extérieure par enrobage n'est pas indispensable: une couche d'émail ou de peinture d'indentification est suffisante.

**Revendications**

1. Condensateur céramique de puissance, caractérisé en ce qu'il comporte, en premier lieu, un corps monolithique multi-couches constitué par l'empilage de films diélectriques céramiques (18) séparés les uns des autres par des armatures métalliques (12, 13) réparties en deux séries alternées latéralement décalées l'une par rapport à l'autre, les films diélectriques (18) de dimensions supérieures à celles des armatures (12, 13) formant sur chacun des deux côtés opposés dudit corps situés dans le prolongement de la direction de décalage un volume de protection dans lequel est formée une gorge arrondie (21, 22) à effet anti-corona dans laquelle vient affleurer l'une desdites séries d'armatures (12, 13), et, en second lieu, deux connexions électriques extérieures (19, 20) dont chacune est réunie à l'une desdites séries d'armatures (12, 13) au moyen d'une métallisation (14, 15) réalisée dans ladite gorge à effet anti-corona, chaque gorge ayant une forme telle qu'elle allonge les lignes de fuite du champ électrique sur le pourtour des métallisations (14, 15) de prise de connexion et assure la protection mécanique et l'isolement électrique par rapport à la masse desdites métallisations (14, 15).

2. Condensateur de puissance selon la revendication 1, caractérisé en ce que les films diélectriques céramiques ont une épaisseur comprise entre 20 et 200 microns.

3. Condensateur de puissance selon l'une des revendications 1 ou 2, caractérisé en ce que l'épaisseur des armatures est comprise entre 2 et 10 microns.

4. Condensateur de puissance selon l'une des revendications 1 à 3, caractérisé en ce que les armatures métalliques (12 et 13) ont une forme rectangulaire dont les angles sont arrondis, de manière à éviter les effets de pointes aux hautes tensions.

5. Condensateur de puissance selon l'une des revendications 1 à 4, caractérisé en ce que deux armatures flottantes (16, 17) non connectées électriques aux autres armatures, sont disposées extérieurement à l'empilage d'armatures (12, 13) de manière à diminuer le gradient de potentiel à l'extérieur du condensateur, et assurer en coopération avec les gorges métallisées (14, 15) la fermeture du champ de fuite sur lui-même.

6. Condensateur de puissance selon l'une des revendications 1 à 5, caractérisé en ce que les connexions externes (19, 20) sont en ruban d'argent et sont frittées sur les métallisations (14, 15) de prise de contact au moyen d'un émail à base d'argent.

7. Condensateur de puissance selon l'une des revendications 1 à 6, caractérisé en ce que lesdites gorges (21, 22) sont remplies par un polymère solide de manière à augmenter l'isolement électrique du condensateur et améliorer la résistance à l'arrachement des connexions externes (19, 20).

8. Condensateur de puissance selon l'une des revendications 1 à 7, caractérisé en ce que les gorges sont taillées dans le corps monolithique.


**Patentansprüche**

1. Keramischer Leistungskondensator, dadurch gekennzeichnet, daß er in erster Linie einen monolithischen Mehrschichtkörper umfaßt, der aus einem Stapel dielektrischer Dünnschichten (18) gebildet ist, welche voneinander durch Metallbeläge (12, 13) getrennt sind, die in zwei alternierenden Reihen verteilt sind, die seitlich gegeneinander versetzt sind, wobei die dielektrischen Dünnschichten (18) größere Abmessungen haben als die Beläge (12, 13) und auf jeder der beiden einander gegenüberliegenden Seiten des genannten Körpers, die in der Verlängerung der Versetzungsrichtung liegen, ein Schutzvolumen bilden, in welchem eine abgerundete Rinne (21, 22) gebildet ist, die einen Anti-Korona-Effekt bewirkt und an welcher eine der beiden Reihen von Belägen (12, 13) zur Berührung kommt, und in zweiter Linie zwei äußere elektrische Anschlüsse (19, 20) umfaßt, von denen jeder mit einer der genannten Reihen von Belägen (12, 13) über eine Metallisierung (14, 15) verbunden ist, welche in der genannten Rinne mit Anti-Korona-Effekt gebildet ist, wobei jede Rinne eine solche Form aufweist, daß sie die Streulinien des elektrischen Feldes am Umfang der Kontaktierungsmetallisierungen (14, 15) verlängert und den mechanischen Schutz sowie die elektrische Isolierung der genannten Metallisierungen (14, 15) gegen Masse gewährleistet.

2. Leistungskondensator nach Anspruch 1, dadurch gekennzeichnet, daß die dielektrischen keramischen Dünnschichten eine Dicke zwischen 20 und 200 Mikron aufweisen.

3. Leistungskondensator nach Anspruch 1 oder 2, dadurch gekennzeichnet, daß die Dicke der Beläge zwischen 2 und 10 Mikron beträgt.

4. Leistungskondensator nach einem der Ansprüche 1 bis 3, dadurch gekennzeichnet, daß die metallischen Beläge (12 und 13) eine rechtwinklige Gestalt aufweisen, deren Winkel abgerundet sind, so daß bei hohen Spannungen Spitzeneffekte vermieden werden.

5. Leistungskondensator nach einem der Ansprüche 1 bis 4, dadurch gekennzeichnet, daß zwei schwimmende Beläge (16, 17), die mit den anderen Belägen nicht elektrisch verbunden sind, auf der Außenseite des Belagstapels (12, 13) so angeordnet sind, daß sie den Potentialgradienten auf der Außenseite des Kondensators reduzieren und im Zusammenwirken mit den metallisierten Rinnen (14, 15) die Zurückführung des Streufeldes auf sich selbst gewährleisten.

6. Leistungskondensator nach einem der Ansprüche 1 bis 5, dadurch gekennzeichnet, daß die äußeren Anschlüsse (19, 20) als Silberstreifen ausgeführt sind und mittels eines Emails auf Silberbasis an die Kontaktierungsmetallisierungen (14, 15) angefrittet sind.

7. Leistungskondensator nach einem der Ansprüche 1 bis 6, dadurch gekennzeichnet, daß die Rinnen (21, 22) mit einem festen Polymer ausgefüllt sind, so daß die elektrische Isolierung des Kondensators verbessert und die Reißfestigkeit der äußeren Anschlüsse (19, 20) gesteigert wird.

8. Leistungskondensator nach einem der Ansprüche 1 bis 7, dadurch gekennzeichnet, daß die Rinnen in den monolithischen Körper eingeschnitten sind.


**Claims**

1. Ceramic power capacitor, characterized in that it comprises, in the first place, a monolithic multi-layer body formed of a stack of dielectric ceramic films (18) separated from each other by metallic coatings (12, 13) distributed in two alternating series laterally shifted with respect to each other, the dielectric films (18) having dimensions exceeding those of the coatings (12, 13) and forming, on each of the two opposed sides of said body lying in the extended shifting direction, a protection volume in which a rounded anti-corona effect gorge (21, 22) is formed to which one of said coating series (12, 13) is adjacent, and in the second place, two outer electrical connections (19, 20) each of which is connected to one of said coating series (12, 13) through a metallization (14, 15) formed in said anti-corona gorge, each gorge having a shape such that it extends the leakage lines of the electrical field on the periphery of the contacting metallizations (14, 15) and assures the mechanical protection and electrical insulation of said metallizations (14, 15) from ground.

2. Power capacitor in accordance with claim 1, characterized in that the dielectric ceramic films have a thickness comprised between 20 and 200 microns.

3. Power capacitor in accordance with claim 1 or 2, characterized in that the thickness of the coatings is comprised between 2 and 10 microns.

4. Power capacitor in accordance with any of claims 1 to 3, characterized in that the metallic coatings (12 and 13) are of rectangular shape having rounded angles in a manner to avoid tip effects at high potentials.

5. Power capacitor in accordance with any of claims 1 to 4, characterized in that two floating coatings (16, 17) which are not electrically connected to the other coatings are arranged outside of the coating stack (12, 13) in a manner to reduce the potential gradient outside of the capacitor and to assure the closing of the leakage field on itself in cooperation with the metallized gorges (14, 15).

6. Power capacitor in accordance with any of claims 1 to 5, characterized in that the external connections (19, 20) are formed of silver strips and fritted to the contacting metallizations (14, 15) by means of a silver based enamel.

7. Power capacitor in accordance with any of claims 1 to 6, characterized in that said gorges (21, 22) are filled with a solid polymer in a manner to increase the electrical insulation of the capacitor and to improve the tear resistance of the outer connections (19, 20).

8. Power capacitor in accordance with any of claims 1 to 7, characterized in that the gorges are cut into the monolithic body.

Fig. 1

Fig. 2

Fig. 3

Fig. 4

Fig. 5

Fig. 6